# EUROPÄISCHE PATENTSCHRIFT

(11) **EP 2 417 298 B1**
(45) Veröffentlichungstag und Bekanntmachung des Hinweises auf die Patenterteilung: **10.09.2014**
(21) Anmeldenummer: 10707458.5
(22) Anmeldetag: 26.02.2010
(51) Int. Cl.: E01B 27/04

(54) **SPEICHERWAGEN ZUM TRANSPORT VON SCHÜTTGUT UND VERFAHREN**
STORAGE CART FOR TRANSPORTING BULK GOODS, AND METHOD
WAGON DE STOCKAGE POUR LE TRANSPORT DE MATIÈRE EN VRAC ET PROCÉDÉ

(30) Priorität: 07.04.2009 AT 5442009
(43) Veröffentlichungstag der Anmeldung: 15.02.2012
(73) Patentinhaber: Franz Plasser Bahnbaumaschinen-Industriegesellschaft m.b.H., 1010 Wien (AT)
(72) Erfinder: THEURER, Josef, A-1010 Wien (AT); BRUNNINGER, Manfred, A-4203 Altenberg (AT)
(86) Internationale Anmeldenummer: PCT/EP2010/001184
(87) Internationale Veröffentlichungsnummer: WO 2010/115489

(56) Entgegenhaltungen:
- WO-A2-2007/116249
- CH-A5- 657 649

## Beschreibung

Die Erfindung betrifft einen Speicherwagen zum Transport von Schüttgut, mit einem Container sowie einem als Bodenfläche dienenden, innerhalb des Containers angeordneten und in einer Wagenlängsrichtung verlaufenden, ein Aufnahme- und Abwurfende aufweisenden Bodenförderband, sowie mit einem an einem vorderen Wagenende positionierten und über dieses vorkragenden Übergabeförderband, wobei an einem hinteren Wagenende ein in Wagenlängsrichtung verschiebbares Beladeförderband sowie eine Aushubeinrichtung und eine Arbeitskabine vorgesehen sind.

Außerdem betrifft die Erfindung auch noch ein Verfahren zur Inbetriebnahme des Beladeförderbandes.

Ein derartiger Speicherwagen ist durch WO 2007/116249 A3 bekannt. Die Aushubeinrichtung ist gemeinsam mit einer Arbeitskabine direkt am Wagenrahmen befestigt, wobei das Beladeförderband relativ zum Wagenrahmen in eine Arbeitsposition verschiebbar ist. Eine derartige konstruktive Lösung ermöglicht nur eine eingeschränkte Breite und Länge des Beladeförderbandes.

Die Aufgabe der vorliegenden Erfindung liegt nun in der Schaffung eines Speicherwagens der eingangs genannten Art bzw. eines Verfahrens, mit dem eine leistungsfähigere Beladung durchführbar ist.

Diese Aufgabe wird erfindungsgemäß mit einem Speicherwagen der gattungsgemäßen Art dadurch gelöst, dass die Aushubeinrichtung und die Arbeitskabine direkt auf dem Beladeförderband in einem unmittelbar an ein Aufnahmeende angrenzenden Abschnitt des Beladeförderbandes angeordnet sind.

Diese konstruktive Lösung ermöglicht eine breitere und damit leistungsfähigere Ausbildung des Beladeförderbandes, da die Aushubeinrichtung mitsamt der Arbeitskabine oberhalb des Beladeförderbandes angeordnet ist. Außerdem ist eine optimale Positionierung sowohl der Aushubeinrichtung als auch der Arbeitskabine nahe zur Aushubstelle gewährleistet.

Mit dem erfindungsgemäßen Verfahren ist auch bei einer für eine größere Leistung schwereren Ausbildung des Beladeförderbandes ein sehr einfacher Wechsel zwischen Arbeits- und Überstellposition möglich.

Weitere Vorteile der Erfindung ergeben sich aus den Unteransprüchen und der Zeichnungsbeschreibung.

Im Folgenden wird die Erfindung anhand in der Zeichnung dargestellter Ausführungsbeispiele näher beschrieben. Es zeigen:

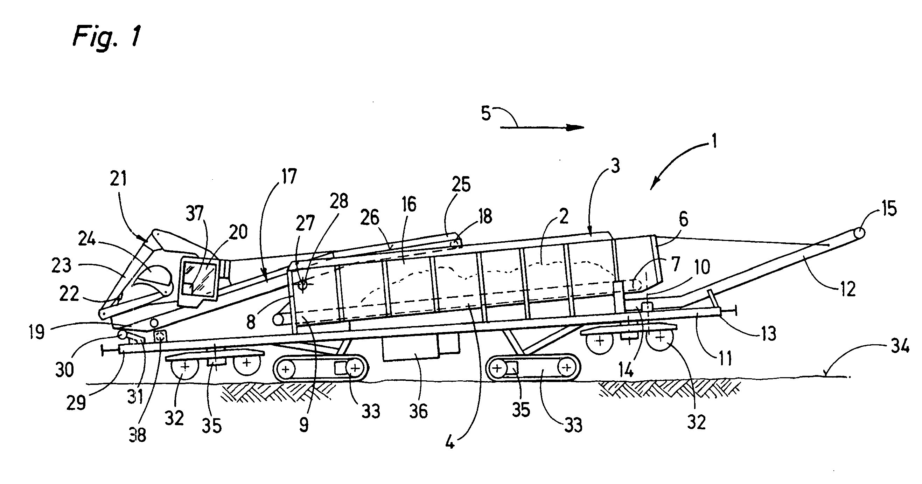

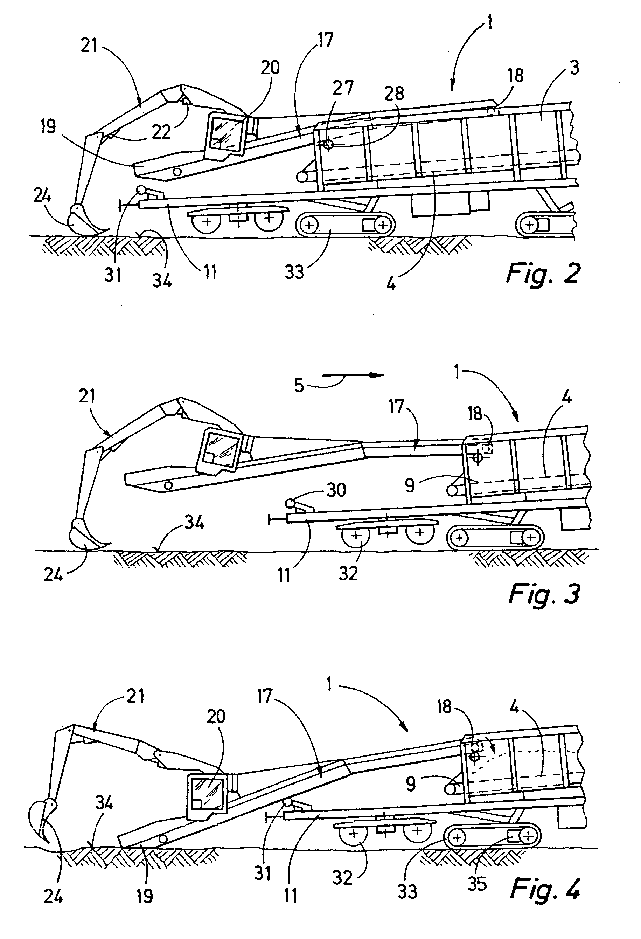

Fig. 1 eine Seitenansicht eines Speicherwagens mit einem Beladeförderband und die Fig. 2 bis 4 eine Variante eines Verfahrens für eine Überstellung des Beladeförderbandes in die Arbeitsposition.

Ein in Fig. 1 ersichtlicher Speicherwagen 1 zum Transport von Schüttgut 2 weist einen Container 3 mit einem als Bodenfläche dienenden Bodenförderband 4 auf. Dieses weist ein bezüglich einer Wagenlängsrichtung 5 an einem vorderen Ende 6 des Containers 3 positioniertes Abwurfende 7 und ein an einem hinteren Ende 8 des Containers 3 gelegenes Aufnahmeende 9 auf.

An einem vorderen Wagenende 13 ist ein um eine Achse 10 verschwenkbares und über einen Wagenrahmen 11 vorkragendes Übergabeförderband 12 vorgesehen. Dieses weist ein unter dem Abwurfende 7 des Bodenförderbandes 4 gelegenes Aufnahmeende 14 sowie ein relativ dazu höher positioniertes Abwurfende 15 auf.

In einem oberen Endbereich 16 des Containers 3 ist ein in Wagenlängsrichtung 5 verlaufendes Beladeförderband 17 mit einem vorderen Abwurfende 18 und einem hinteren Aufnahmeende 19 angeordnet. In einem unmittelbar an das Aufnahmeende 19 anschließenden Abschnitt ist eine Arbeitskabine 20 sowie eine Aushubeinrichtung 21 mit dem Beladeförderband 17 verbunden. Die Aushubeinrichtung 21 ist als durch Antriebe 22 verschwenkbarer und in seiner Länge veränderbarer Baggerausleger 23 mit einer Baggerschaufel 24 ausgebildet.

In der Überstellposition liegt das Beladeförderband 17 mit einem in Wagenlängsrichtung 5 vorderen Ende 25 auf einer als Rolle ausgebildeten Bandabstützung 28 auf. An einem hinteren Wagenende 29 ist eine Abstützrollen 30 zur Auflage des Beladeförderbandes 17 aufweisende zweite Bandabstützung 31 angeordnet.

Der Wagenrahmen 11 ist mit Hilfe zweier Schienenfahrwerke 32 sowie zweier höhenverstellbarer Raupenfahrwerke 33 wahlweise auf einem Gleis oder einer Schotterbettung bzw. Bodenfläche 34 verfahrbar. Ein Motor 36 dient zur Beaufschlagung von Fahrantrieben 35 sowie der verschiedenen anderen Antriebe. Die direkt mit dem Beladeförderband 17 verbundene Arbeitskabine 20 ist mit einer Steuereinrichtung 37 zur Beaufschlagung diverser Antriebe 22 der Aushubeinrichtung 21 ausgestattet.

Der Speicherwagen 1 wird - zweckmäßigerweise mit mehreren, an das vordere Wagenende angekuppelten Speicherwagen - auf einem Gleis zu einer Baustelle verfahren. Dabei befindet sich das Beladeförderband 17 in einer in Fig. 1 gezeigten Überstellposition, bei der sich das gesamte Beladeförderband 17 oberhalb des Wagenrahmens 11 bzw. im oberen Endbereich des Containers 3 befindet.

Für eine Überstellung des Beladeförderbandes 17 in eine in Fig. 4 ersichtliche Arbeitsposition wird eine Winde 38 beaufschlagt. Diese bewirkt eine Längsverschiebung des auf den Bandabstützungen bzw. Abstützrollen 28, 30 aufliegenden Beladeförderbandes 17 relativ zum Speicherwagen 1 in eine in Fig. 4 dargestellte Arbeitsposition. Bei dieser befindet sich einerseits die Aushubeinrichtung 21 und die Arbeitskabine 20 unmittelbar über der Schotterbettung 34 und andererseits das Abwurfende 18 über dem Aufnahmeende 9 des Bodenförderbandes 4. Damit kann nun durch die Baggerschaufel 24 aufgenommenes Schüttgut auf das Aufnahmeende 19 und in weiterer Folge über das Abwurfende 18 des Beladeförderbandes 17 auf das Bodenförderband 4 abgeworfen werden. Die Rückführung des Beladeförderbandes 17 in die Überstellposition erfolgt wiederum durch Beaufschlagung der Winde 38.

Im folgenden wird als Alternative ein zweites Verfahren zur Inbetriebnahme des Beladeförderbandes 17 näher beschrieben. Sobald der Speicherwagen 1 mit Hilfe der abgesenkten Raupenfahrwerke 33 in die gleislose Baustelle eingefahren ist, wird das das Aufnahmeende 19 des Beladeförderbandes 1 durch Absenken der Baggerschaufel 24 auf die Bodenfläche 34 relativ zum Wagenrahmen 11 angehoben (s. Fig. 2). Dabei wird das Beladeförderband 17 geringfügig um Achsen 27 der beiden Bandabstützungen 28 geschwenkt. Anschließend wird der Speicherwagen 1 unter Distanzierung von der örtlich unbewegten Baggerschaufel 24 in Wagenlängsrichtung 5 verfahren, bis das Abwurfende 18 des Beladeförderbandes 17 oberhalb des Aufnahmeendes 9 des Bodenförderbandes 4 zu liegen kommt (s. Fig. 3).

In weiterer Folge wird die Baggerschaufel 24 relativ zum Beladeförderband 17 angehoben, bis dessen Aufnahmeende 19 auf der Bodenfläche 34 aufliegt (Fig. 4).

Um das Beladeförderband 17 in die Überstellposition zu verschieben, erfolgt ein geringfügiges Anheben des Aufnahmeendes 19, indem die Baggerschaufel 24 gegen die Schotterbettung gedrückt wird. Anschließend wird der Speicherwagen 1 unter Beaufschlagung des Fahrantriebes 35 in Richtung zur Baggerschaufel 24 verfahren. Damit erfolgt eine automatische Verschiebung des Beladeförderbandes 17 in die oberhalb des Wagenrahmens 11 befindliche Überstellposition. Mit der zweiten Bandabstützung 31 kann diese Einziehbewegung unterstützt werden.

## Patentansprüche

1. Speicherwagen zum Transport von Schüttgut, mit einem Container (3) sowie einem als Bodenfläche dienenden, innerhalb des Containers (3) angeordneten und in einer Wagenlängsrichtung (5) verlaufenden, ein Aufnahme- und Abwurfende (9, 7) aufweisenden Bodenförderband (4), sowie mit einem an einem vorderen Wagenende (13) positionierten und über dieses vorkragenden Übergabeförderband (12), wobei an einem hinteren Wagenende (29) ein in Wagenlängsrichtung verschiebbares Beladeförderband (17) sowie eine Aushubeinrichtung (21) und eine Arbeitskabine (20) vorgesehen sind, **dadurch gekennzeichnet, dass** die Aushubeinrichtung (21) und die Arbeitskabine (20) direkt auf dem Beladeförderband (17) in einem unmittelbar an ein Aufnahmeende (19) angrenzenden Abschnitt des Beladeförderbandes (17) angeordnet sind.

2. Verfahren zur Inbetriebnahme eines auf einem Speicherwagen (1) nach Anspruch 1 angeordneten Beladeförderbandes (17), **dadurch gekennzeichnet, dass** das Aufnahmeende (19) des Beladeförderbandes (17)
durch Absenken der Baggerschaufel (24) auf eine Bodenfläche (34) relativ zu einem Wagenrahmen (11) angehoben und danach der Speicherwagen (1) unter Distanzierung von der Baggerschaufel (24) verfahren wird, bis ein Abwurfende (18) des Beladeförderbandes (17) oberhalb des Aufnahmeendes (9) des Bodenförderbandes (4) zu liegen kommt, wonach anschließend die Baggerschaufel (24) relativ zum Beladeförderband (17) angehoben wird, bis dessen Aufnahmeende (19) auf der Bodenfläche (34) aufliegt.

## Claims

1. A storage wagon for transporting bulk material, including a container (3) and a bottom conveyor belt (4), extending in a longitudinal direction (5) of the wagon, which is arranged within the container (3) and serves as a bottom surface and comprises a receiving- and discharge end (9, 7), and also including a transfer conveyor belt (12) positioned at a front end (13) of the wagon and projecting beyond the same, wherein a loading conveyor belt (17), displaceable in the longitudinal direction of the wagon, as well as an excavating device (21) and a work cabin (20) are provided at a rear end (29) of the wagon, **characterized in that** the excavating device (21) and the work cabin (20) are arranged directly on the loading conveyor belt (17) in a section of the loading conveyor belt (17) immediately adjoining a receiving end (19).

2. A method for putting into operation a loading conveyor belt (17) arranged on a storage wagon (1) according to claim 1, **characterized in that** the receiving end (19) of the loading conveyor belt (17) is lifted relative to a wagon frame (11) by lowering the excavator shovel (24) upon a ground surface (34), and thereafter the storage wagon (1) is moved while being distanced from the excavator shovel (24) until a discharge end (18) of the loading conveyor belt (17) comes to lie above the receiving end (9) of the bottom conveyor belt (4), after which the excavator shovel (24) is subsequently lifted relative to the loading conveyor belt (17) until the receiving end (19) of the latter rests on the ground surface (34).

## Revendications

1. Wagon de stockage pour le transport de marchandise en vrac, avec un conteneur (3) ainsi qu'une bande transporteuse au sol (4) servant de surface du plancher, disposée au sein du conteneur (3) et s'étendant dans une direction longitudinale du wagon (5), présentant une extrémité de réception et de décharge (9, 7), ainsi qu'avec une bande transporteuse de remise (12) positionnée sur une extrémité avant du wagon (13) et faisant saillie au-delà de celle-ci, dans lequel une bande transporteuse de chargement (17) pouvant être coulissée dans la direction longitudinale du wagon ainsi qu'un dispositif de déblai (21) et une cabine de travail (20) sont prévus sur une extrémité arrière du wagon (29), **caractérisé en ce que** le dispositif de déblai (21) et la cabine de travail (20) sont disposés directement sur la bande transporteuse de chargement (17) dans une section de la bande transporteuse de chargement (17) directement adjacente à une extrémité de réception (19).

2. Procédé de mise en service d'une bande transporteuse de chargement (17) disposée sur un wagon de stockage (1) selon la revendication 1, **caractérisé en ce que** l'extrémité de réception (19) de la bande transporteuse de chargement (17) est soulevée par abaissement de la pelle à curer (24) sur une surface du plancher (34) par rapport à un châssis de wagon (11) et le wagon de stockage (1) est ensuite déplacé en écartant la pelle à curer (24) jusqu'à ce qu'une extrémité de décharge (18) de la bande transporteuse de chargement (17) vienne en appui au-dessus de l'extrémité de réception (9) de la bande transporteuse au sol (4), suite à quoi la pelle à curer (24) est ensuite soulevée par rapport à la bande transporteuse de chargement (17) jusqu'à ce que son extrémité de réception (19) repose sur la surface du plancher (34).
